# EUROPEAN PATENT APPLICATION

(11) **EP 4 273 645 A1**
(43) Date of publication of application: **08.11.2023**
(21) Application number: 22171927.1
(22) Date of filing: 05.05.2022
(51) Int. Cl.: G05B 19/418

(54) **SYSTEM AND METHOD FOR EXCHANGING PROCESS DATA RELATED TO INDUSTRIAL MANUFACTURING OR PROCESSING**

(71) Applicant: BASF SE, 67056 Ludwigshafen am Rhein (DE)
(72) Inventor: Gau, Sebastian, 67061 Ludwigshafen am Rhein (DE)
(74) Representative: Eisenführ Speiser

(57) **Abstract**

The invention relates to a system for exchanging process data related to industrial manufacturing or processing, in particular, to chemical manufacturing or processing is proposed. The system comprises at least one process data providing unit, a process data distribution unit, a local process data interface and an integration layer management plane. The at least one process data providing unit is configured for providing process data related to industrial manufacturing or processing, in particular, to chemical manufacturing or processing. The process data distribution unit is connected to a communication system of interconnected computer networks and to a corporate industrial manufacturing network and configured for providing process data via the communication system of interconnected computer networks and/or via the corporate industrial manufacturing network. The local process data interface is connected to the process data distribution unit via the corporate industrial manufacturing network and to a local industrial production network and configured for enabling an exchange of provided process data between the process data distribution unit and the local industrial production network via the corporate industrial manufacturing network. The system's integration layer management plane is configured for triggering the process data distribution unit and the local process data interface to exchange provided process data. The system enables an exchange of process data related to industrial manufacturing or processing in a network landscape in production industry and in particular in chemical industry.

## Description

### FIELD OF THE INVENTION

The invention relates to a system, to a method and to a computer program for exchanging process data related to industrial manufacturing or processing, in particular, to chemical manufacturing or processing. Moreover, the invention relates to a non-transitory computer readable data medium storing the computer program. The invention may find use for exchanging process data related to industrial manufacturing or processing, in particular, to chemical manufacturing or processing between different recipients, e.g., located at different plants on a production site, e.g., between chemical plants on a chemical production site. The invention may also find use for exchanging process data between recipients located at different production sites, e.g., chemical production sites.

### BACKGROUND OF THE INVENTION

In industrial production, it is often required that process data related to industrial manufacturing or processing carried out in a certain plant are made available to several recipients. This may be, for example, if the process data related to a specific chemical process are required in order to be able to conduct another chemical process. Another situation in which process data related to industrial manufacturing or processing are of interest for several recipients may include a checking of a status of that a certain industrial process or checking a quality associated with an industrial process. Recipients that need access to the process data related to industrial manufacturing or processing carried out in a certain industrial plant may reside in the same industrial plant or at another industrial plant or at another industrial production site.

It would thus be advantageous if it were possible to enable a performant and flexible process data integration between process data producers and several recipients in industrial manufacturing or processing industry and in particular, in chemical manufacturing or processing.

### SUMMARY OF THE INVENTION

The present invention is based on the objective of providing an improved or at least alternative system, a method, and a computer program for exchanging process data related to industrial manufacturing or processing, in particular, to chemical manufacturing or processing. In particular, the system, method, and computer program shall enable an efficient and flexible exchange of process data related to industrial manufacturing or processing, in particular, to chemical manufacturing or processing between different interconnected networks associated with various process data producers and process data recipients.

According to the invention, a system for exchanging process data related to industrial manufacturing or processing, in particular, to chemical manufacturing or processing is proposed. The system comprises at least one process data providing unit, a process data distribution unit, a local process data interface and an integration layer management plane.

The at least one process data providing unit is configured for providing process data related to industrial manufacturing or processing, in particular, to chemical manufacturing or processing. The process data distribution unit is connected to a communication system of interconnected computer networks and to a corporate industrial manufacturing network and configured for providing process data via the communication system of interconnected computer networks and/or via the corporate industrial manufacturing network. The local process data interface is connected to the process data distribution unit via the corporate industrial manufacturing network and to a local industrial production network and configured for enabling an exchange of provided process data between the process data distribution unit and the local industrial production network via the corporate industrial manufacturing network. The system's integration layer management plane is configured for triggering the process data distribution unit and the local process data interface to exchange provided process data.

The invention includes the recognition that a network landscape in industry and in particular in chemical industry is typically separated into non-corporate networks, corporate networks, and local industrial production networks, e.g., of chemical production sites comprising one more chemical plants. Often it is required that process data related to chemical manufacturing or processing present in one of these networks are made available to recipients residing in another one of these networks.

With the system, it is possible to exchange process data related to industrial manufacturing or processing, in particular, to chemical manufacturing or processing in a corresponding network landscape in production industry. This is achieved with the system in that a process data distribution unit is provided that may exchange process data via a communication system of interconnected computer networks that may be a non-corporate network such as the internet. Furthermore, the process data distribution unit is connected to a corporate industrial manufacturing network to exchange process data via the corporate industrial manufacturing network that may be an intranet of an industrial manufacturing company. The process data distribution unit thus enables an exchange of process data via the communication system of interconnected computer networks and via the corporate industrial manufacturing network. Thereby, the process data to be exchanged may be provided via the communication system of interconnected computer networks or via the corporate industrial manufacturing network. A recipient may thus receive process data via either the communication system of interconnected computer networks or via the corporate industrial manufacturing network.

Since the system comprises the local process data interface, it is possible to exchange process data between the corporate industrial manufacturing network and a local industrial production network that may be or comprise a chemical plant network or a chemical production site network. With the system, it is thus possible to exchange process data between the local industrial production network and the communication system of interconnected computer networks via the corporate industrial manufacturing network by means of the local process data interface and the process data distribution unit. The at least one process data providing unit may provide process data related to industrial manufacturing or processing via any of the local industrial production network, the corporate industrial manufacturing network and the communication system of interconnected computer networks such that a highly efficient process data integration between these networks may be achieved with the system.

Herein, process data related to industrial manufacturing or processing may represent a property of a process employed for fabricating an industrial product. In particular, process data may relate to chemical manufacturing and may represent a property of chemical process in which a product is created by transforming organic and/or inorganic raw materials with chemical processes. A property of a chemical process may include but is not limited to a progress, i.e. a status, of the chemical process, compounds used in the chemical process, process parameters applied in the chemical process, and measured properties of chemical product. A property of a chemical process may also include which raw materials are being used, what chemical process is applied, what the operating conditions are or what the operating parameters employed in the chemical process are, and/or what equipment is being used in the chemical process.

The communication system of interconnected computer networks, preferably, is a non-corporate network, e.g., comprising the public internet and/or hyperscaler-side virtual networks that can be peered among each other. For example, hyperscaler-side virtual networks may be managed via software-defined networking (SDN). Hyperscaler-side virtual networks have the advantage that they are often comparatively performant and stable.

The corporate industrial manufacturing network may be an intranet that connects IT infrastructure - sometimes globally - on corporate level. The corporate industrial manufacturing network may be a corporate chemical manufacturing network of a chemical manufacturing company. In particular, the corporate industrial manufacturing network may be a corporate network of a chemical manufacturing company that uses the system for exchanging process data related to chemical manufacturing or processing.

The local industrial production network may be a local chemical production network and may be connected to or part of the corporate industrial manufacturing network. The local industrial production network may be or may comprise a local plant network, e.g., of a chemical plant or a local production site network comprising several local plant networks of chemical plants of a chemical production site.

A local plant network may be local to a production site comprising several plants or local to a single industrial production plant. Preferably, a local plant network enables connections between components residing within an industrial plant, i.e., control systems and other systems providing basic automation functionality.

The local process data interface, preferentially, is a local integration gateway. The local process data interface preferably serves for integrating the local industrial production network into the corporate industrial manufacturing network. For example, the local industrial production network may be connected to or may comprise several local plant networks or a local production site network such that via the local process data interface these local networks can be integrated into the corporate industrial manufacturing network for exchanging process data. The local process data interface may be set up as a hardware device residing in the field or as software, for example, as a virtual machine running under a hypervisor on a pre-existing edge hardware installation.

The system's integration layer management plane, preferentially, is implemented using software and may be part of the process data distribution unit, the local process data interface or other components of the system. The integration layer management plane may also be distributed over several parts of the system, e.g., the process data distribution unit, the local process data interface and/or the at least one process data providing unit. The integration layer management plane, preferably, serves for controlling the exchange of process data within the system, e.g., by triggering the exchange of process data between the process data distribution unit, the local process data interface and/or the at least one process data providing unit.

The at least one process data distribution unit, preferentially, is a messaging broker (sometimes also referred to as message broker, integration broker or interface engine) and serves for exchanging process data via the communication system of interconnected computer networks and/or the corporate industrial manufacturing network. The process data distribution unit may be connected to another process data distribution unit either of the same system or of a different system for replicating process data between these two process data distribution units. A messaging broker may be implemented as an intermediary computer program module that enables software applications to communicate by exchanging formally-defined messages, e.g., containing or representing process data.

The at least one process data providing unit may be a control unit of a plant that is configured for providing process data, a memory that is configured for storing process data, a sensor that is configured for generating process data, or a messaging broker, e.g., of a system for exchanging process data related to industrial manufacturing or processing, e.g., of a different industrial production site.

Preferably, next to process data, remote procedure calls (RPC) related to industrial manufacturing or processing, in particular, to chemical manufacturing or processing may be exchanged in the system. For example, RPCs for triggering some action in a chemical process or the like, e.g., as part of remote controlling of a chemical process or the like, may be exchanged in the system. For example, RPCs may be provided via the system for controlling an avatar performing some action as part of chemical manufacturing or processing in a chemical plant.

Preferably, the local process data interface comprises an integration service that is configured for querying provided process data from the local chemical production network and/or for integrating provided process data by sending the provided process data to the process data distribution unit. An integration services may be configured to query local data sources and to integrate additional process data by sending it to the closest process data distribution unit that may be a messaging broker, e.g. based on a cyclic schedule or triggered by external events. An integration service may comprise containerized computer programs that may be developed externally and afterwards scheduled for execution on the local process data interface that may be a local integration gateway to implement new or adapt existing functionality.

Preferably, the integration service is configured for sending process data based on a predefined cyclic schedule to the process data distribution unit or when triggered to do so by the integration layer management plane. For example, integration service may be triggered for sending process data upon receiving a corresponding RPC. In particular, an integration service may be configured to be controllable using a RPC that may be provided via any of the communication system of interconnected computer networks, corporate industrial manufacturing network, the local industrial production network and a local plant network.

The system may comprise at least two process data providing units wherein the local process data interface comprises at least two integration services, each of them being assigned to one of the at least two process data providing units for querying provided process data from the respective process data providing unit. In this case, the local process data interface may collect process data from several process data providing units, e.g., from different chemical plants or different sensors in one chemical plant or the like.

In case, the system comprises at least two process data providing units, the local process data interface may preferably be configured for aggregating process data provided by the at least two process data providing units and for enabling an exchange of the aggregated process data between the process data distribution unit and the local industrial production network via the corporate industrial manufacturing network. In particular, the local process data interface may be configured for aggregation of multiple process data streams stemming from local data sources, e.g., different sensors, to forward them to the process data distribution unit, e.g., that may be the messaging broker to which communication can be established using the best network connectivity compared to other available messaging brokers. The local process data interface may be further configured for providing retention of at least some process data of the aggregated process data. Process data retention may enable temporary buffering of aggregated process data to offer resilience to network outages for an extended period of time.

Preferably, at least one process data providing unit is configured for providing the process data to the process data distribution unit via the communication system of interconnected computer networks and/or via the corporate industrial manufacturing network. In this case, process data providing unit is connected to the communication system of interconnected computer networks and/or the corporate industrial manufacturing network.

Alternatively or additionally, at least one process data providing unit may be configured for providing the process data to the local process data interface via the local industrial production network. In this case, the process data providing unit is connected to the local industrial production network and may be part of an industrial plant that may be chemical plant, e.g., a control or measurement unit or a sensor in that industrial plant.

For example, the system may further comprise at least one local plant network of a chemical plant that is connected to the local chemical production network. In this case, the process data providing unit may be part of the chemical plant and the provided process data may be related to chemical manufacturing or a chemical process carried out in that chemical plant.

The invention also relates to an arrangement comprising at least two systems, each of them being configured according to the above-described system, i.e., having at least one process data providing unit, a process data distribution unit, a local process data interface and an integration layer management plane that is configured for triggering the process data distribution unit and the local process data interface to exchange provided process data.

Preferably, in the arrangement, the process data distribution units of the at least two systems are connected to each other via the communication system of interconnected computer networks and via the corporate industrial manufacturing network and configured for replicating process data between them at least via the communication system of interconnected computer networks. For replicating process data, the process data distribution units of the arrangement may be configured to use a Kafka linking or a Message Queuing Telemetry Transport (MQTT) bridge. In particular, the process data distribution units may be messaging brokers that are set up in a distributed fashion, e.g. one broker per chemical production site. Preferably, the messaging brokers support bidirectional process data replication between the messaging brokers, e.g., using Kafka cluster linking or using a MQTT bridge. In particular, the integration layer management plane of at least one of the systems may be configured for triggering a selective replication of process data between the process data distribution units of the at least two systems.

Furthermore, the invention relates to a method for exchanging process data related to industrial manufacturing or processing, in particular, to chemical manufacturing or processing. The method comprises the steps of:
- providing a process data distribution unit that is connected to a communication system of interconnected computer networks and to a corporate industrial manufacturing network and configured for exchanging process data via the communication system of interconnected computer networks and/or via the corporate industrial manufacturing network,
- providing a local process data interface that is connected to the process data distribution unit and to a local industrial production network and configured for enabling an exchange of process data between the process data distribution unit and the local industrial production network via the corporate industrial manufacturing network,
- providing process data related to industrial manufacturing or processing, in particular, to chemical manufacturing or processing, with a process data providing unit to one of the process data distribution unit and the local process data interface, and
- triggering the process data distribution unit and the local process data interface with an integration layer management plane to exchange the provided process data between them.

The method may optionally comprise the further step of triggering the process data distribution unit and a further process data distribution unit to replicate provided process data between them via the communication system of interconnected computer networks. For example, the one process data distribution unit may be part of a first system for exchanging process data related to industrial manufacturing or processing and the other process data distribution unit may be part of a second system for exchanging process data related to industrial manufacturing or processing as described above. Exchanging process data via the communication system of interconnected computer networks may be advantageous since the exchange of process data can often be performed more efficiently compared to an exchange of process data via a corporate industrial manufacturing network.

The invention also relates to a computer program for exchanging process data related to industrial manufacturing or processing, in particular, to chemical manufacturing or processing, wherein the computer program is configured for triggering a process data distribution unit and a local process data interface to exchange provided process data related to industrial manufacturing or processing between them and/or for triggering the process data distribution unit and a further process data distribution unit to replicate the provided process data between them at least via a communication system of interconnected computer networks, when run on a computer. The invention also relates to a non-transitory computer readable data medium storing the computer program.

It shall be understood that the aspects described above, and specifically the system of claim 1, the method of claim 12 and the computer program of claim 14, have similar and/or identical preferred embodiments, in particular as defined in the dependent claims.

It shall be understood that a preferred embodiment of the present invention can also be any combination of the dependent claims or above embodiments with the respective independent claim.

These and other aspects of the present invention will be apparent from and elucidated with reference to the embodiments described hereinafter.

### BRIEF DESCRIPTION OF THE DRAWINGS

- Fig. 1: shows an arrangement comprising three systems that are configured for exchanging process data related to industrial manufacturing or processing,
- Fig. 2: shows an arrangement comprising two systems for exchanging process data representing quality information related to chemical manufacturing, and
- Fig. 3: shows an arrangement comprising two systems for exchanging process data representing quality information related to the chemical manufacturing of PU foam.

### DETAILED DESCRIPTION OF EMBODIMENTS

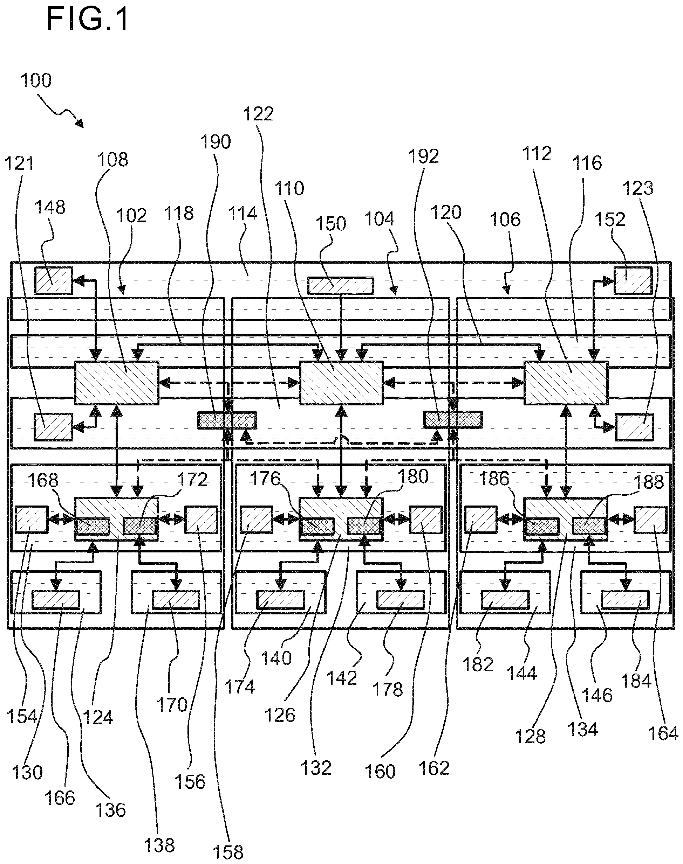

Figure 1 shows an arrangement 100 comprising three systems 102, 104, 106 that are configured for exchanging process data related to industrial manufacturing or processing. Exemplary, the arrangement 100 is described with respect to chemical manufacturing or processing. Yet, the arrangement 100 may also be used for exchanging process data related to industrial manufacturing or processing in other industrial sectors outside the chemical industry.

In alternative embodiments of the arrangement 100, only one system or two systems or more than three systems may be present. Each of the systems 102, 104, 106 may be associated with a different chemical production site that may even be spatially separated. The arrangement 100 thus represents a network landscape of a chemical manufacturing company that has several production sites that are connected to each other via one or more networks for exchanging process data.

Each system 102, 104, 106 comprises a process data distribution unit 108, 110, 112 that may be configured as a messaging broker. The process data distribution units 108, 110, 112 are connected to the public Internet 114 representing a communication system of interconnected computer networks. Furthermore, the process data distribution units 108, 110, 112 are connected to hyperscalar virtual networks 116 which likewise represents a communication system of interconnected computer networks. Each of the process data distribution units 108, 110, 112 supports a bidirectional data replication between another process data distribution unit 108, 110, 112 via the hyperscaler virtual networks 116 using a Kafka cluster linking 118, 120. Alternatively to the Kafka cluster linking 118, 120, a MQTT bridge may be employed for replicating process data between the process data distribution units 108, 110, 112.

The process data distribution units 108, 110, 112 are also connected to each other via a corporate chemical manufacturing network 122. The corporate chemical manufacturing network 122 may be the intranet of a chemical manufacturing company.

Each system 102, 104, 106 comprises a local process data interface 124, 126, 128 that is implemented as a local integration gateway. Each of the local process data interfaces 124, 126, 128 is used for integrating a local chemical production network 130, 132, 134 as part of a respective one of the systems 102, 104, 106. In more detail, local process data interface 124 is configured for integrating the local chemical production network 130 into system 102. Local process data interface 126 is configured for integrating the local chemical production network 132 into system 104. Moreover, local process data interface 128 is configured for integrating the local chemical production network 134 into system 106. Each of the local chemical production networks 130, 132, 134 may represent a local chemical production network of a chemical production site associated with a respective one of the systems 102, 104, 106.

In particular, local process data interfaces 124, 126, 128 enable a connection between the local chemical production networks 130, 132, 134, respectively, to the corporate chemical production network 122. Thereby, it is possible to exchange process data via the local process data interface 124, 126, 128 between the local chemical production networks 130, 132, 134, respectively, with corporate chemical production network 122.

Each of the local chemical production networks 130, 132, 134 is connected to two local plant networks that is local plant networks 136 and 138 being connected to local chemical production network 130, local plant networks 140 being connected to local chemical production network 132 and local plant networks 144 and 146 being connected to local chemical plant network 134.

The arrangement 100 furthermore comprises several process data producers or consumers that reside in different ones of the before described networks. For example, via the Internet 114, process data producers or consumers 148 150 and 152 may exchange process data with process data distribution units 108, 110, 112, respectively. In particular, a process data producer may be a process data providing unit such as a control unit of a plant that is connected to the Internet 114 for exchanging process data. A consumer may be a customer of the chemical manufacturing company that may require process data of a chemical plant for checking a status of a product. A consumer may also be interested in process data for checking the quality of a product during manufacturing.

Furthermore, process data producers or consumers may reside in the corporate chemical manufacturing network 122. For example, the corporate chemical manufacturing network 122 may contain one or more databases that implement a process data providing unit for providing process data that are contained in the databases. Only exemplary, in the arrangement 100, system 102 comprises a process data producer or consumer 121 that may exchange process data via the corporate chemical manufacturing network 122 with the process data distribution unit 108. In addition, system 104 comprises a process data producer or consumer 123 residing in the corporate chemical manufacturing network 122 for exchanging process data with the process data distribution unit 112.

Again exemplary, local chemical production networks 130, 132, 134, each are used for exchanging process data between two process data consumers or producers that are process data producers or consumers 154 and 156 for local chemical production network 130, process data consumer or producers 158 and 160 for local chemical production network 132, and process data consumer or producers 162 and 164 for local chemical production network 134. The process data producers or consumers 154, 156, 158, 160, 162, 164 may also be implemented as databases storing process data associated with a respective one of the local chemical production sites or may be consumers of the local chemical production site such as control and/or evaluation units used for controlling one or more chemical plants of the respective local chemical production site.

Each local chemical production site associated with one of the systems 102, 104, 106, respectively, comprises two chemical plants each of them having a local plant network. It is to be understood, that of course each local chemical production site may comprise also only one chemical plant or more than two chemical plants.

As described before, each local chemical production network 130, 132, 134 of the systems 102, 104, 106, respectively, is connected to two local plant networks 136, 138, 140, 142, 144, 146. Via each of the local plant networks 136, 138, 140, 142, 144, 146, a process data consumer or producer may exchange process data with the respective local chemical production network 130, 132, 134. That is, via local plant network 136, process data producer or consumer 166 may exchange process data with the local chemical production network 130. Local plant network 136 is integrated using local process data interface 124. For querying process data from process data producer or consumer 166, local process data interface 124 comprises an integration service 168 that may be used for integrating process data by sending it to process data distribution unit 108. Via local plant network 138, process data consumer or producer 170 may exchange process data with the local process data interface 124 using integration service 172.

Accordingly, using local plant network 140, process data producer or consumer 174 may exchange process data with the local process data interface 126 by means of the integration service 176 and process data producer and consumer 178 may exchange process data via the local plant network 142 via the integration service 180 of the local process data interface 126. System 106 comprises two process data producers or consumers 182, 184 that exchange via the local plant networks 144, 146 process data with the local process data interface 128 using the integration service 186 and the integration service 188, respectively.

Using streaming messages that may be small chunks of process data, which may comprise asynchronous communication, e.g., RPCs that can lead to remote execution of functionality implemented on the local process data interface 124, 126, 128, for example, adding, starting or stopping additional integration services 166, 170, 176, 180, 186, 188 on the respective local process data interface 124, 126, 128 or calling functions implemented within the integration services 166, 170, 176, 180, 186, 188, for example using json-rpc.

Streaming measured messages may also be process data stemming from devices within a plant, for example time series data enriched with a source context specifier to be written to a process data distribution unit 108, 110, 112. Streaming messages may also be process data that may be read from a process data distribution unit 108, 110, 112 and that is to be provided to one of the process data consumers or producers residing in the field.

The arrangement 100 further comprises two integration layer management planes 190, 192 that reside in the corporate chemical manufacturing network 122. The integration layer management planes 190, 192 are configured to enable a secure, highly available central point of access to fulfil management tasks associated with the operation of the arrangement 100. Such operations may comprise selective replication of process data between process data distribution units 108, 110, 112 via Kafka cluster linking or a MQTT bridge via the hyperscaler virtual network 116. Furthermore, operations may comprise a creation, and updating, or a deletion of process data. Using an RPC, it may be possible to control an avatar of a chemical plant in a remote manner for assisting or conducting a chemical process in that chemical plant.

The arrangement 100 enables to write and read process data or to execute RPCs from different process data producers and consumers of arrangement 100.

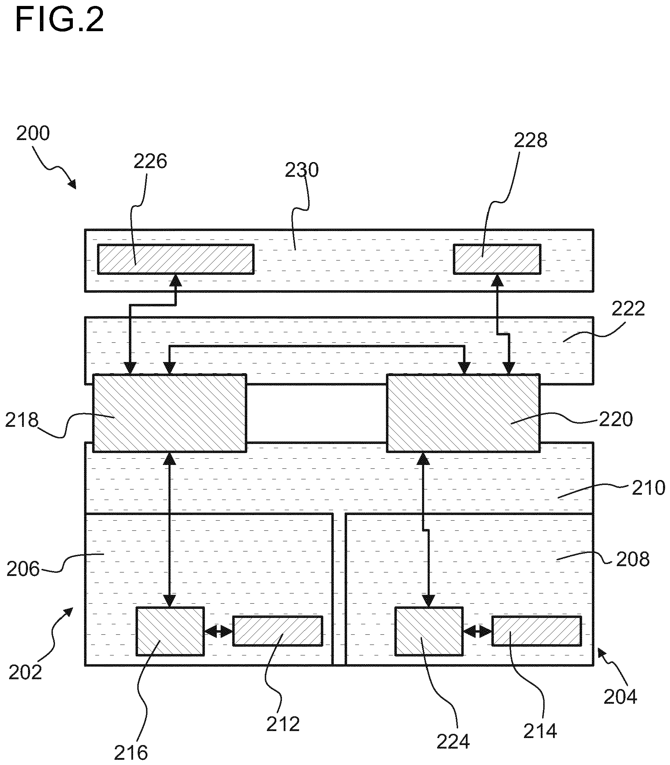

Figure 2 shows an arrangement 200 comprising two systems 202, 204 for exchanging process data related to chemical manufacturing or processing. Alternatively, the arrangement 200 may also be used for exchanging process data related to industrial manufacturing or processing outside the chemical industry.

Each of the two systems 202, 204 is associated with a different local chemical production side each having a local chemical production network 206, 208, respectively. The local chemical production networks 206, 208 are embedded into a corporate chemical manufacturing network 210 of a chemical manufacturing company.

In each of the local chemical production networks 206, 208, a process data producer or consumer 212, 214, respectively, resides. Only exemplary, the process data producers or consumers 212, 214 each are implemented as a long range wide area network (LoRoWAN) sensor that is configured to track quality information from a respective chemical plant residing in one of the local chemical production sites associated with local chemical production networks 206, 208, respectively. Each of the LoRoWAN sensors may be connected to a respective LoRoWAN backend residing in the respective local chemical production site. It may be that the quality information tracked by one of the LoRoWAN sensors 212, 214 are of interest at the respective other local chemical production site. For example, the quality information may be of interest for a production manager responsible for the quality in the plant in a first local chemical production site wherein the production manager is residing in a second local chemical production site. It may further be desired to process the tracked quality information at the first local chemical production site and at the second local chemical production side. It is thus required to exchange the quality information represented by a process data between the two systems 202, 204.

To this end, LoRoWAN sensor 212 provides the process data representing the tracked quality information to a local process data interface 216 that may be a local integration gateway. The local process data interface 216 enables an exchange of process data between the LoRoWAN sensor 212 and a process data distribution unit 218 via the corporate chemical manufacturing network 210 using the local process data interface 216. The process data distribution unit 218 is connected to a process data distribution unit 220 of system 204 via a cloud virtual network 222 that is implemented by a communication system of interconnected computer networks. Process data distribution units 218 and 220 may replicate the process data between them using a MQTT bridge. Alternatively, Kafka cluster linking may be used. The process data distribution unit 220 is also connected to the corporate chemical manufacturing network 210. Usually corporate networks such as corporate man chemical manufacturing network 210 are comparatively outdated and provide insufficient network performance, for example, latency and throughput can vary substantially among regions. It is thus beneficial to tunnel traffic through a communication system of interconnected computer networks such as the cloud virtual network or a hyperscaler virtual network as described herein.

The process data distribution unit 220 may now exchange the received process data representing the quality information tracked by LoRoWAN sensor 212 with a local process data interface 224 of system 204. The local process data interface 224 allows an exchange of the process data with process data producer or consumer 214 of system 204.

Each of the process data distribution units 218, 220 may also exchange the process data with process data producers or consumers 226, 228 residing in the public Internet 230. For example, a production manager may reside in an office external to the local chemical production sites associated with local chemical production networks 206, 208 and may receive process data representing quality information tracked by a LoRoWAN sensor 212 from one of the process data distribution units 218, 220.

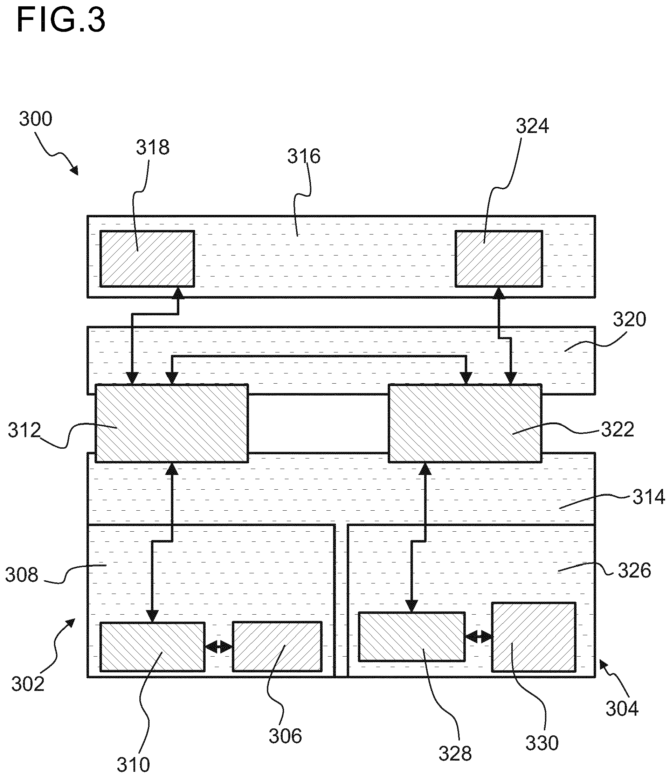

Figure 3 shows an arrangement 300 comprising two systems 302, 304 for exchanging process data representing product important quality information related to the chemical manufacturing of a polyurethane (PU) foam. The systems 302, 304 may be associated with different local chemical production sites.

With respect to arrangement 300, a specific implementation of exchanging process data is described in the following at the example of manufacturing of a foam made of PU, e.g. intended for use for the fabrication of a shoe sole. Initially, a process data producer 306 such as a LoRoWAN sensor or other sensor may track quality information associated with the manufacturing of the PU foam in a chemical plant of a first local chemical production site having a local chemical manufacturing network 308. Process data generated by the process data producer 306 may represent a quality information of the PU foam and may be exchanged between a local process data interface 310 and a process data distribution unit 312 of the system 302 via a corporate chemical manufacturing network 314 of the chemical manufacturing company.

From the process data distribution unit 312, the process data may be provided for several process data consumers. In particular, the quality information associated with the PU foam may be of interest for several process data consumers that are internal or external to the chemical manufacturing company. For example, a production manager of the chemical manufacturing company may be outside the local chemical manufacturing sites but may need the process data associated with the quality information of the PU foam fabrication for analysis or evaluation purposes. For providing the process data, the process data distribution unit 312 that may be a messaging broker is connected to the public Internet 316 and may provide the process data to a production manager 318 via the Internet 316.

The process data distribution unit 312 is additionally connected to a cloud virtual network 324 for replicating process data with a process data distribution unit 322 of system 304 being associated with a second local chemical production site. The process data distribution unit 322 is also connected to the public Internet 316 and thereby allows exchanging the replicated process data with a process data consumer 324 that may be an external company, for example, a customer of the chemical manufacturing company that uses the PU foam for fabricating shoe soles for shoes. The process data consumer 324 may be interested in the quality of the PU foam even during manufacturing of the PU form and therefore may need access to process data representing a tracked quality information of the PU foam.

The system 304 comprises a local chemical manufacturing network 326 associated with the second local chemical production site of system 304. Using a local process data interface 328, the process data may be exchanged between the local process data interface 328 and the process data distribution unit 322. This allows a process data consumer 330 residing in the local chemical manufacturing network 326 such as a process data evaluation unit for receiving and evaluating the process data generated by the process data producer 306.

Other variations to the disclosed embodiments can be understood and effected by those skilled in the art in practicing the claimed invention, from a study of the drawings, the disclosure, and the appended claims.

For the processes and methods disclosed herein, the operations performed in the processes and methods may be implemented in differing order. Furthermore, the outlined operations are only provided as examples, and some of the operations may be optional, combined into fewer steps and operations, supplemented with further operations, or expanded into additional operations without detracting from the essence of the disclosed embodiments.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like providing process data related to industrial manufacturing or processing, exchanging process data via the communication system of interconnected computer networks and/or via the corporate industrial manufacturing network, enabling an exchange of process data between the process data distribution unit and the local chemical production network via the corporate industrial manufacturing network, triggering the process data distribution unit and the local process data interface with an integration layer management plane to exchange the provided process data between them, etc. performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any units described herein may be processing units that are part of a classical computing system. Processing units may include a general-purpose processor and may also include a field programmable gate array (FPGA), an application specific integrated circuit (ASIC), or any other specialized circuit. Any memory may be a physical system memory, which may be volatile, non-volatile, or some combination of the two. The term "memory" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing system. This may include both an executable component in the heap of a computing system, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable component were binary, or it may be structured to be interpretable and/or compiled, for instance, whether in a single stage or in multiple stages, so as to generate such binary that is directly interpretable by the processors. In other instances, structures may be hard coded or hard wired logic gates, that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hardware, or a combination. Any embodiments herein are described with reference to acts that are performed by one or more processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for example, either hardwired, wireless, or a combination of hardwired or wireless, to a computing system, the computing system properly views the connection as a transmission medium. Transmission media can include a network and/or data links which can be used to carry desired program code means in the form of computer-executable instructions or data structures and which can be accessed by a general-purpose or special-purpose computing system or combinations. While not all computing systems require a user interface, in some embodiments, the computing system includes a user interface system for use in interfacing with a user. User interfaces act as input or output mechanism to users for instance via displays.

Those skilled in the art will appreciate that at least parts of the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, main-frame computers, mobile telephones, PDAs, pagers, routers, switches, datacenters, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices.

Those skilled in the art will also appreciate that at least parts of the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

## Claims

1. A system for exchanging process data related to industrial manufacturing or processing, in particular, to chemical manufacturing or processing, said system comprising:
- at least one process data providing unit that is configured for providing process data related to industrial manufacturing or processing, in particular, to chemical manufacturing or processing,
- a process data distribution unit that is connected to a communication system of interconnected computer networks and to a corporate industrial manufacturing network and configured for providing process data via the communication system of interconnected computer networks and/or via the corporate industrial manufacturing network,
- a local process data interface that is connected to the process data distribution unit via the corporate industrial manufacturing network and to a local industrial production network and configured for enabling an exchange of provided process data between the process data distribution unit and the local industrial production network via the corporate industrial manufacturing network, wherein
- the system further comprises an integration layer management plane that is configured for triggering the process data distribution unit and the local process data interface to exchange provided process data.

2. The system of claim 1, wherein the local process data interface comprises an integration service that is configured for querying provided process data from local industrial production network and/or for integrating provided process data by sending the provided process data to the process data distribution unit.

3. The system of claim 2, wherein the integration service is configured for sending process data based on a predefined cyclic schedule to the process data distribution unit or when triggered to do so by the integration layer management plane.

4. The system of claim 2 or 3, comprising at least two process data providing units wherein the local process data interface comprises at least two integration services, each of them being assigned to one of the at least two process data providing units for querying provided process data from the respective process data providing unit.

5. The system of at least one of the preceding claims, comprising at least two process data providing units and wherein the local process data interface is configured for aggregating process data provided by the at least two process data providing units and for enabling an exchange of the aggregated process data between the process data distribution unit and the local industrial production network via the corporate industrial manufacturing network.

6. The system of at least one of the preceding claims, wherein the process data providing unit is configured for providing the process data to the process data distribution unit via the communication system of interconnected computer networks and/or via the corporate industrial manufacturing network.

7. The system of at least one of the preceding claims, wherein the process data providing unit is configured for providing the process data to the local process data interface via the local industrial production network.

8. The system of at least one of the preceding claims, further comprising at least one local plant network of an industrial plant, in particular, a chemical plant, that is connected to the local industrial production network, wherein the process data providing unit is part of the industrial plant and the provided process data are related to an industrial process carried out in said industrial plant.

9. An arrangement of at least two systems that are configured according to the system of at least one of the preceding claims, wherein the process data distribution units of the at least two systems are connected to each other via the communication system of interconnected computer networks and the corporate industrial manufacturing network and configured for replicating process data between them via the communication system of interconnected computer networks.

10. The arrangement of claim 9, wherein for replicating process data, the process data distribution units are configured to use a Kafka linking or a Message Queuing Telemetry Transport bridge.

11. The arrangement of claim 9 or 10, wherein the integration layer management plane of at least one of the systems is configured for triggering a selective replication of process data between the process data distribution units of the at least two systems.

12. A method of exchanging process data related to industrial manufacturing or processing, in particular, to chemical manufacturing or processing, said method comprising
- providing a process data distribution unit that is connected to a communication system of interconnected computer networks and to a corporate industrial manufacturing network and configured for exchanging process data via the communication system of interconnected computer networks and/or via the corporate industrial manufacturing network,
- providing a local process data interface that is connected to the process data distribution unit and to a local industrial production network and configured for enabling an exchange of process data between the process data distribution unit and the local chemical production network via the corporate industrial manufacturing network,
- providing process data related to industrial manufacturing or processing, in particular, to chemical manufacturing or processing, with a process data providing unit to one of the process data distribution unit and the local process data interface, and
- triggering the process data distribution unit and the local process data interface with an integration layer management plane to exchange the provided process data between them.

13. The method of claim 12, further comprising triggering the process data distribution unit and a further process data distribution unit to replicate provided process data between them via the communication system of interconnected computer networks.

14. A computer program for exchanging process data related to industrial manufacturing or processing, in particular, to chemical manufacturing or processing, wherein the computer program is configured for triggering a process data distribution unit and a local process data interface to exchange provided process data related to industrial manufacturing or processing, in particular, to chemical manufacturing or processing, between them and/or for triggering the process data distribution unit and a further process data distribution unit to replicate the provided process data between them via a communication system of interconnected computer networks, when run on a computer.

15. A non-transitory computer readable data medium storing the computer program of claim 14.
